# EUROPEAN PATENT APPLICATION

(11) **EP 4 592 205 A1**
(43) Date of publication of application: **30.07.2025**
(21) Application number: 25154374.0
(22) Date of filing: 28.01.2025
(51) Int. Cl.: B65B 43/56, B65B 57/16

(54) **APPARATUS AND METHOD FOR INSERTING ARTICLES INSIDE CONTAINERS**

(30) Priority: 29.01.2024 IT 202400001683
(71) Applicant: CT PACK S.r.l., 40053 Valsamoggia (BO) (IT)
(72) Inventor: BARLATI, Michele, 44121 FERRARA (IT); MEZZARO, Daniele, 44121 FERRARA (IT); RAGAZZI, PAOLO, 41035 MASSA FINALESE (MODENA) (IT); TAGLIATTI, Federico, 44022 COMACCHIO (FERRARA) (IT)
(74) Representative: Milli, Simone

(57) **Abstract**

An apparatus (1) for inserting articles (A) inside containers (C) comprising:
- a conveying surface (2) comprising a plurality of electrically magnetisable elements;
- a plurality of units (4) for conveying articles (A), comprising magnetic elements and movable on said conveying surface (2), each conveying unit (4) comprising a seat (5) configured to receive at least one portion of a container (C);
- a control unit (6), connected to said electrically magnetisable elements of the conveying surface (2) for activating them and deactivating them, so as to generate a predetermined magnetic field variable on said conveying surface (2) and allow, consequently, the movement of said conveying units (4) above said conveying surface (2),
the control unit (6) being configured for moving the conveying units (4) according to a sequence of movement which affects:
- a first zone (Z1) for loading containers (C), in which the conveying units (4) receive the containers (C) inside respective seats (5);
- a second zone (Z2) for collecting articles (A) inside containers (C) positioned in the respective seats (5) of conveying units (4);
- a third zone (Z3) for picking up containers (C) having inside them the respective articles (A).

## Description

This invention relates to an apparatus and a method for inserting articles inside containers.

There are a plurality of prior art apparatuses which insert articles inside containers, in a substantially continuous manner.

A type of these apparatuses comprises a plurality of article feed lines, which may be conveyed individually or in groups, and also a line for conveying containers. In these apparatuses, there is a zone of intersection of the article feed lines with those of the containers, to allow the release of articles inside the containers.

These apparatuses are characterised, by their very nature, by an extremely limited operating flexibility and, on the contrary, have an intrinsic operating rigidity and low responsiveness to variations in the feed flows.

In effect, the presence of anomalies in the feed flow of the articles or of the containers leads to problems in the operation of such apparatuses, which may lead to the formation of containers which are not correctly filled with articles or to the rejection of numerous containers.

A strongly felt need in this sector is that of being able to have apparatuses for inserting articles inside containers which are particularly flexible, and immune to any disturbances of feeding the articles or the containers.

The need is therefore felt to satisfy the above-mentioned requirement.

The aim of this invention is to satisfy the above-mentioned need by providing an apparatus and a method for inserting articles in containers which is particularly flexible.

A further aim of the invention is to provide an apparatus and a method for inserting articles in containers which is able to quickly and effectively manage any anomalies in the feeding of the articles or of the containers.

The advantages and features of the apparatus and method for grouping together articles according to the invention are more apparent in the detailed description below of a non-limiting example embodiment, with reference to the accompanying drawings, in which:

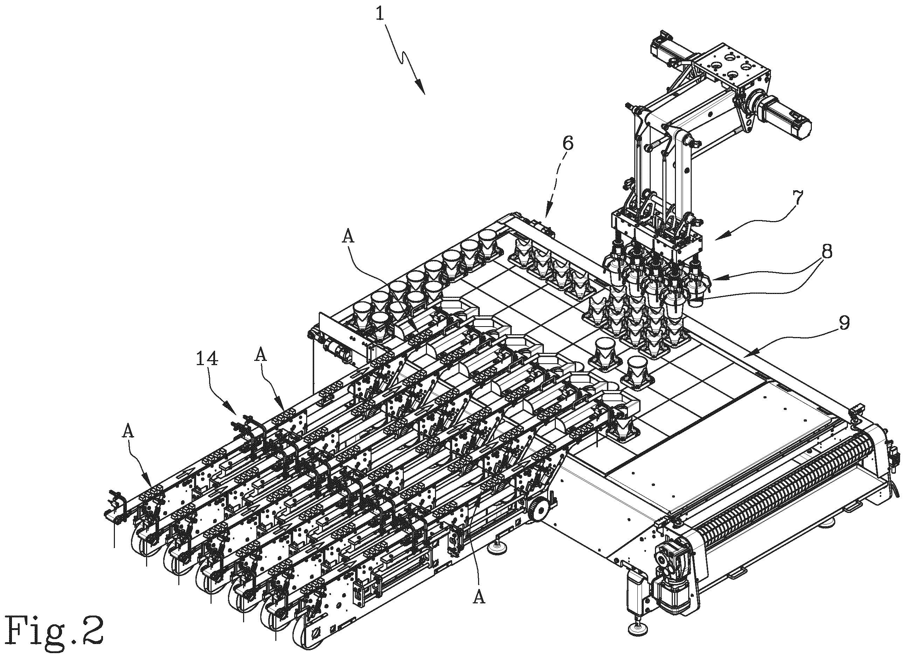

- Figures 1 and 2 are perspective views of an apparatus for inserting articles in containers according to the invention,

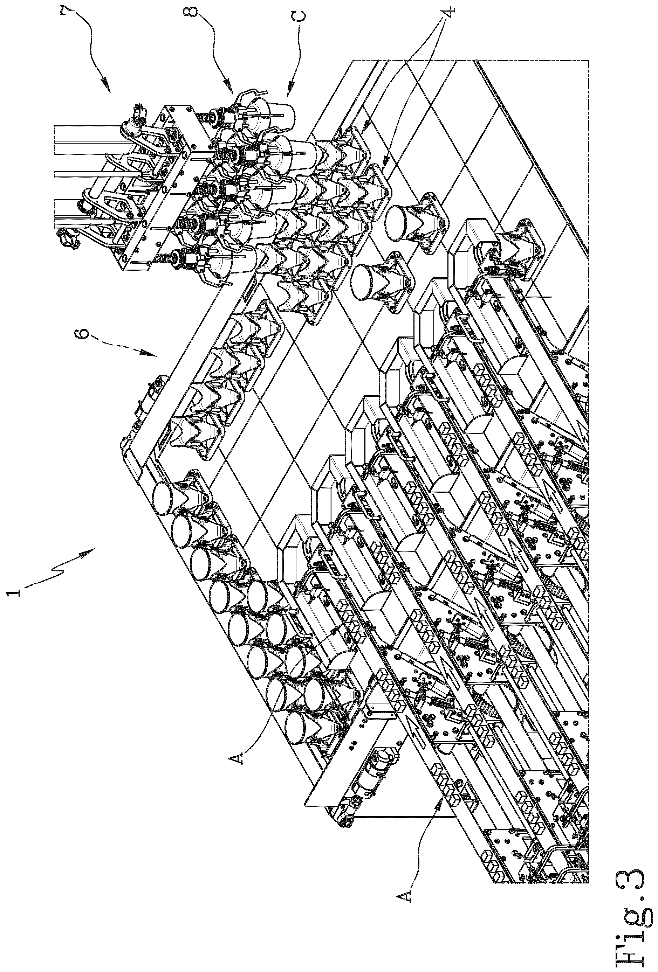

- Figure 3 is a perspective view of the apparatus for inserting articles in containers of Figures 1 and 2, with some parts cut away,

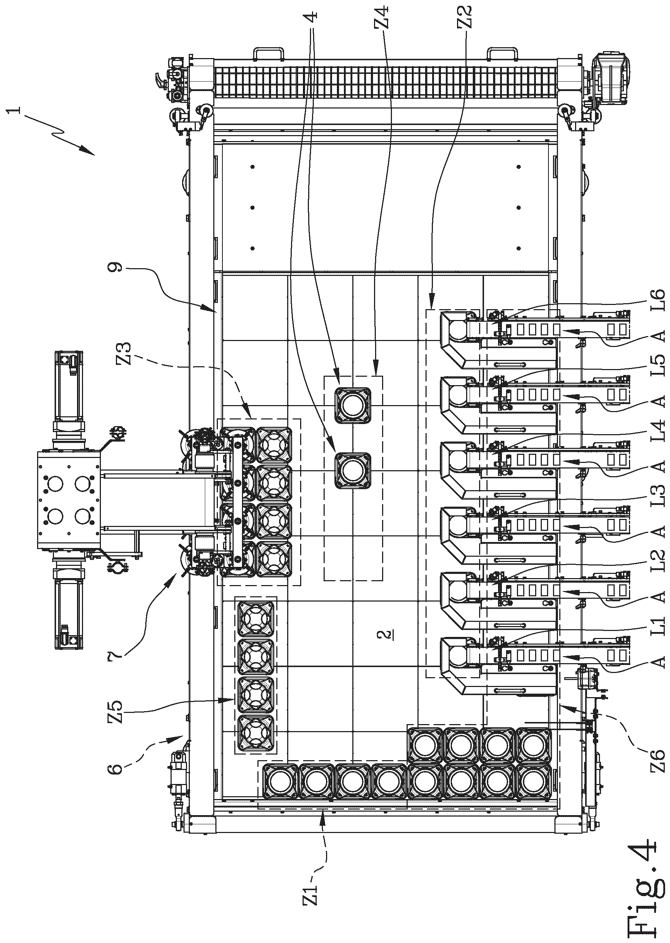

- Figure 4 shows an enlargement of some details of Figure 3,

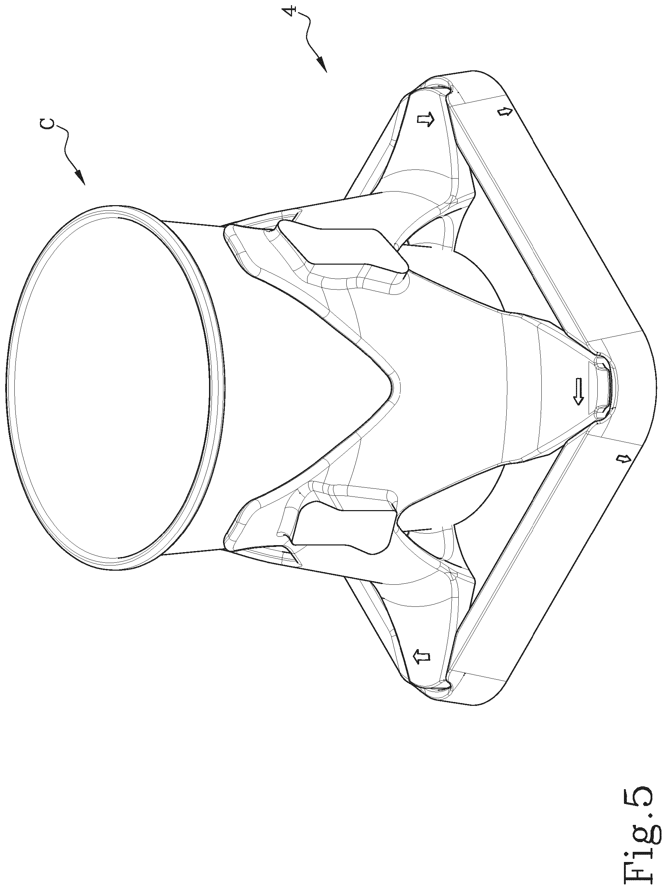

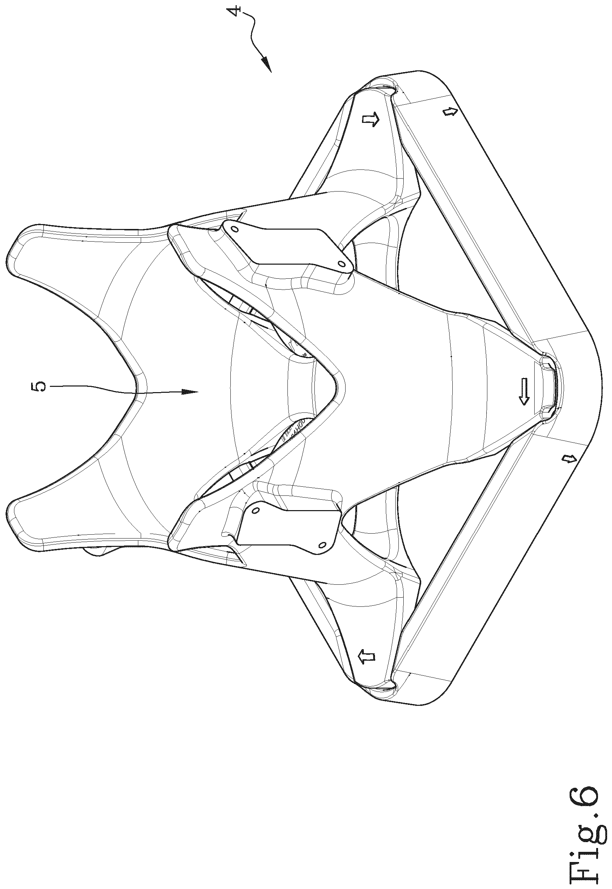

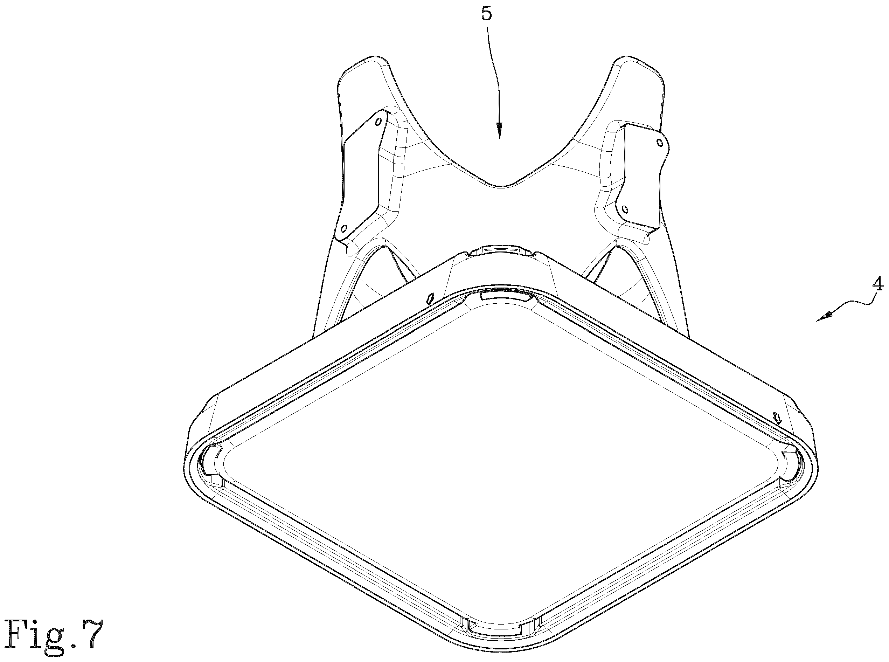

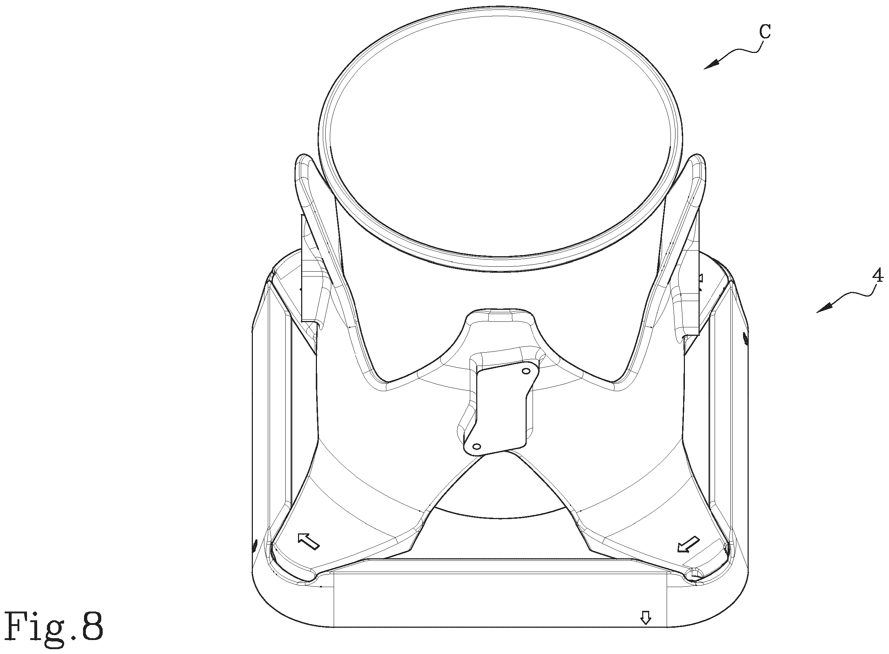

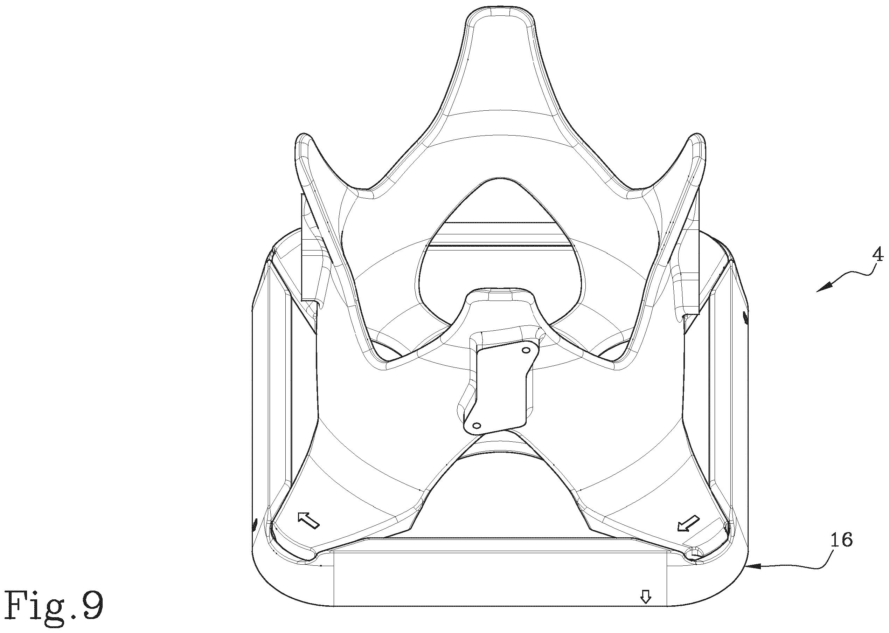

- Figures 5 to 9 are perspective views of a unit forming part of the apparatus of Figures 1-4;

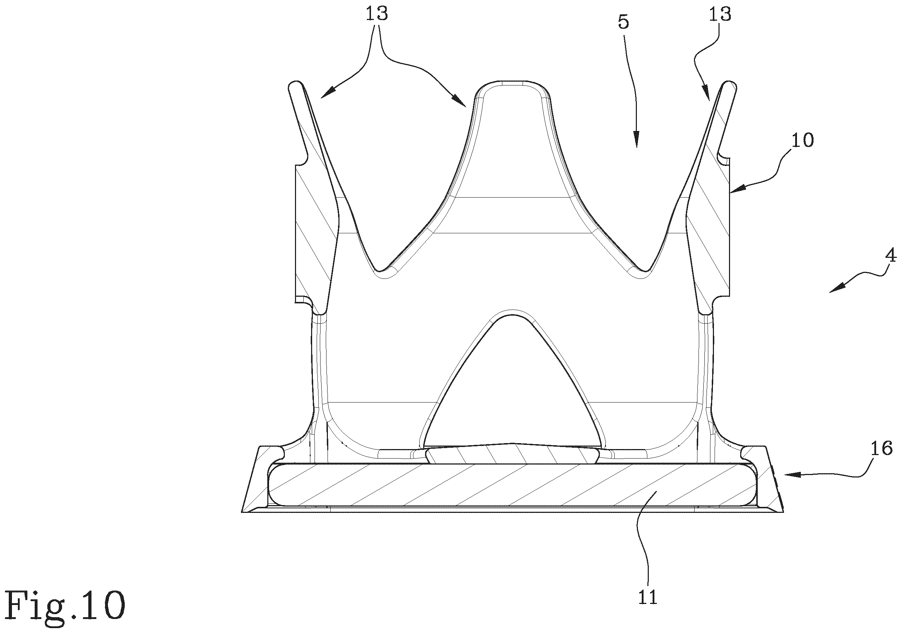

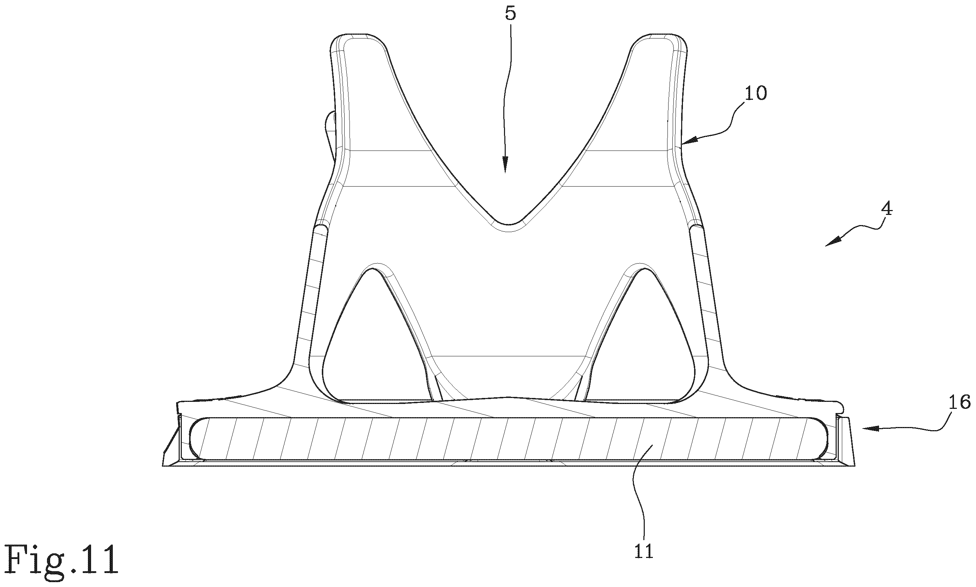

- Figures 10 to 11 are cross sections of the unit of Figures 5 to 9;

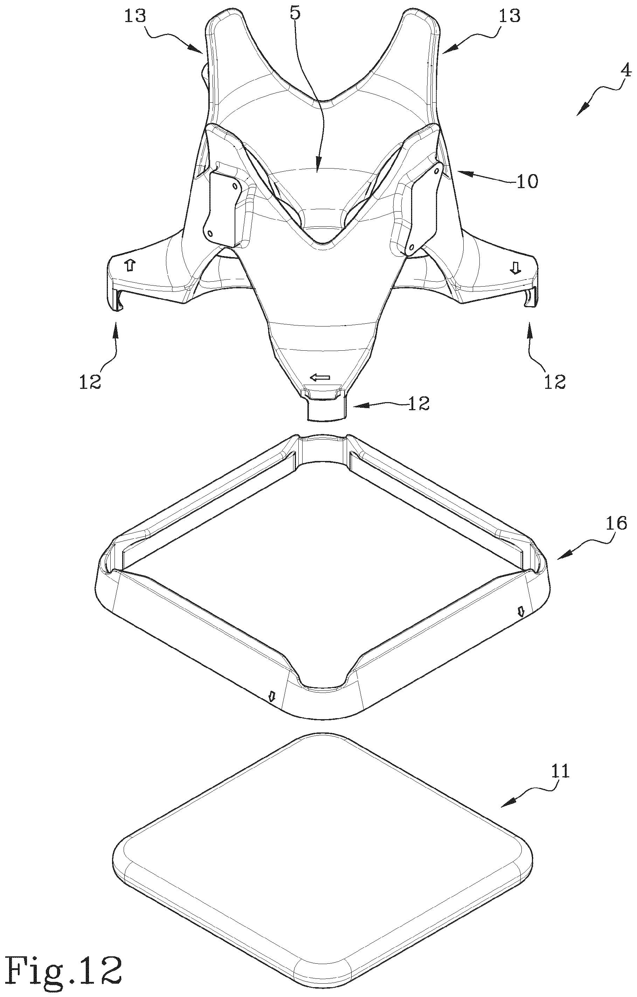

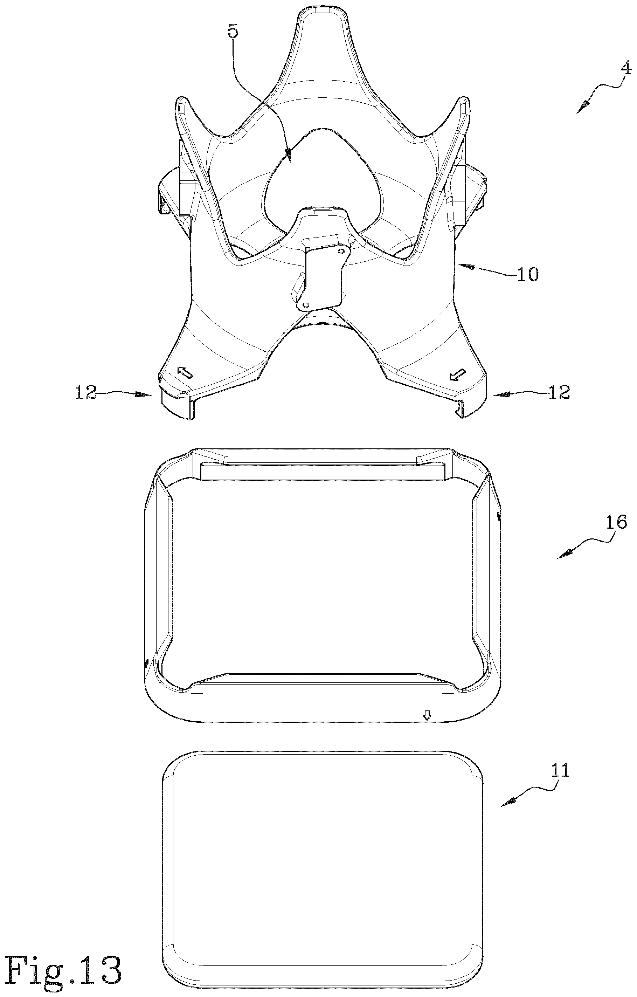

- Figures 12 to 13 are exploded perspective views of the unit of Figures 5 to 11;

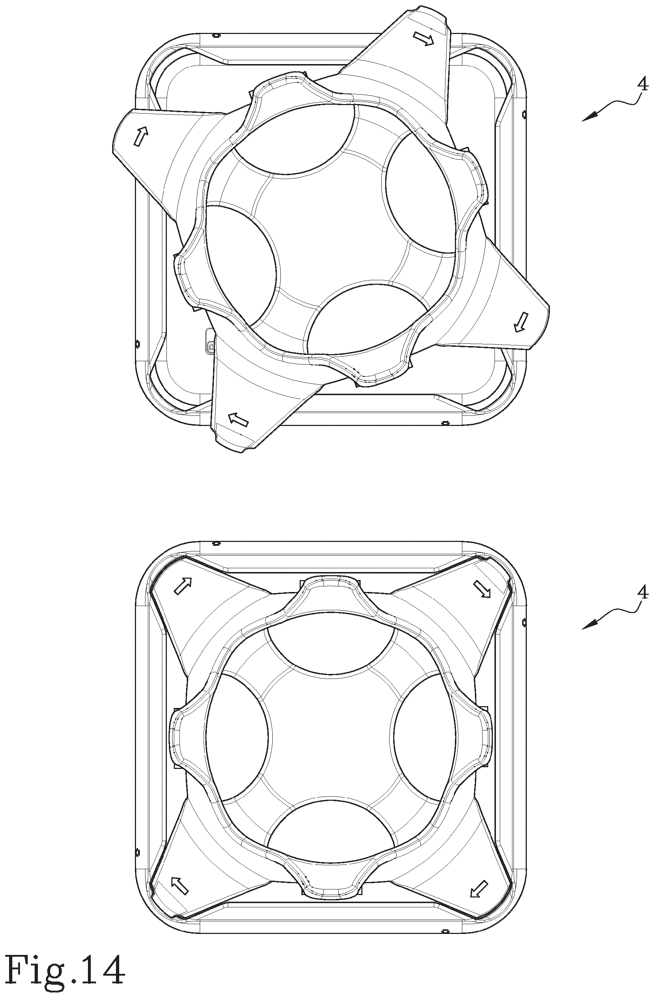

- Figure 14 is a plan view of the unit of Figures 10 to 13 in two different configurations, released and locked, respectively.

The invention defines an apparatus 1 for inserting articles A inside containers C.

The apparatus 1 comprises:
- a conveying surface 2 comprising a plurality of electrically magnetisable elements;
- a plurality of units 4 for conveying articles A, comprising magnetic elements and movable on said conveying surface 2, each conveying unit 4 comprising a seat 5 configured to receive a container C.

The conveying surface 2 and units 4 for conveying articles A define together a planar motor 9.

The apparatus 1 also comprises a control unit 6, connected to said electrically magnetisable elements of the conveying surface 2 for activating them and deactivating them, so as to generate a predetermined magnetic field variable on said conveying surface 2 and allow, consequently, the movement of said conveying units 4 above said conveying surface 2.

The control unit 6 is configured for moving the conveying units 4 according to a sequence of movement which affects:
- a first zone Z1 for loading containers C, in which the conveying units 4 receive the containers C inside respective seats 5;
- a second zone Z2 for collecting articles A inside containers C positioned in the respective seats 5 of conveying units 4;
- a third zone Z for picking up containers C having inside them the respective articles A.

According to another aspect, the control unit 6 is configured to move the conveying units 4 according to a sequence of movement which affects, in sequence, the first loading zone Z1, the second collecting zone Z2 and the third pickup zone Z.

In short, preferably, each conveying unit 4 is made to pass, in order, in the first zone Z1 for loading the containers C, then subsequently in the second zone Z2 for collecting the articles A and, lastly, in the third pickup zone Z.

Described below is a plurality of aspects, that is, technical features, of the apparatus 1.

It is understood that each of these aspects can be combined with one or more of the remaining aspects.

According to one aspect, the elements which can be electrically magnetised, according to a preferred embodiment, are defined by electric coils (that is, electrical cables wound according to a predetermined geometry), if necessary associated with ferromagnetic material.

According to another aspect, the control unit 6 may comprise electronic hardware and/or software modules, located in a same control device or of a distributed type.

The control unit 6 is connected to the electrically magnetisable elements of the conveying surface 2 for activating them and deactivating them, so as to generate a predetermined magnetic field variable on the conveying surface 2.

By deactivating and activating the magnetisable elements the control unit 6 allows the movement of each unit 4 on the conveying surface 2.

It should also be noted that the control unit 6 is configured to activate the magnetisable elements by adjusting the intensity of the magnetic field on the conveying surface 2 generated by the magnetisable elements activated.

More specifically, the magnetic field on the conveying surface 2 interacts with the magnetic elements of each unit 4 allowing the movement on the surface 2.

By means of the movement of the units 4 the articles A contained inside the containers C are transported, avoiding sliding or rolling, preserving the integrity of the articles A and of the containers.

It should be noted that, preferably, the conveying units 4 are moved on the conveying surface 2 without sliding, that is, they are kept raised by the effect of the magnetic field generated by the magnetisable elements.

According to an aspect, the elements which can be electrically magnetised are configured to allow the generation of a variable magnetic field for moving the units 4 in at least a first direction x and/or in a second direction y, at right angles to the first direction x, on the conveying surface 2.

The directions x and y lie on the conveying surface 2.

More specifically, the control unit 6 is configured for controlling the elements which can be magnetically magnetised so as to move the units 4 along the directions x, y of the conveying surface 2.

Advantageously, by moving the units 4 along the directions x and y it is possible to identify paths for the units 4.

According to an aspect, the elements which can be electrically magnetised are configured to allow the conveying units 4 to be also moved along a third direction z, at right angles to the directions x and y.

According to an aspect, the elements which can be electrically magnetised are configured to allow the generation of a variable magnetic field for rotating the conveying units 4 about an axis K of rotation on the conveying surface 2.

Preferably, the axis K is at a right angle to the conveying surface 2.

The control unit 6 is configured to control the elements which can be electrically magnetised so as to rotate the units 4 about the axis K of rotation.

According to another aspect, the apparatus 1 comprises a pickup device 7, operating at said third pickup zone Z of the containers C for picking up the containers C containing the articles A, the pickup device 7 comprising a plurality of pickup elements 8 operating on the containers C.

According to another aspect inherent to the device 7, the pickup device 7 is configured to move the pickup elements 8 between a pickup position, wherein the pickup elements 8 act on the conveying units 4 positioned at the third pickup zone Z of the containers C for picking up said containers C containing the articles A, and a release position, wherein the pickup elements 8 release the containers C picked up.

Preferably, the pickup elements 8 are moved as one.

Preferably, the pickup elements 8 are provided with gripping means, consisting for example of suction cups and/or movable jaws.

Preferably, the pickup elements 8 are positioned proximal to the conveying surface 2 at the pickup position.

Preferably, the pickup elements 8 are positioned proximal to the conveying surface 2 at the release position.

According to an aspect, the elements 8 are carried by a movable arm 12.

According to another aspect, the apparatus 1 comprises a plurality of infeeds L1, L2, L3, L4, L5, L6 for feeding articles A, configured for feeding articles A at the second zone Z2 for collecting the articles A.

According to another aspect, the infeeds (L1, L2, L3, L4, L5, L6) are configured for conveying articles A at the second zone Z2 for collecting the articles A.

According to another aspect, the infeeds (L1, L2, L3, L4, L5, L6) are defined by a plurality of lines L1, L2, L3, L4, L5, L6 for conveying articles A.

Preferably, the lines L1, L2, L3, L4, L5, L6 for conveying articles A are configured for conveying articles A at the second zone Z2 for collecting the articles A.

Preferably, but not necessarily, the articles A are food items.

More generally speaking, the articles A may be products of any type.

It should be noted that, preferably, said infeeds L1, L2, L3, L4, L5, L6 for feeding articles A are configured for conveying groups of articles A.

Preferably, but not necessarily, the lines L1, L2, L3, L4, L5, L6 for conveying articles A are horizontal lines.

It should be noted that, alternatively, according to an embodiment not illustrated, the lines L1, L2, L3, L4, L5, L6 for conveying articles A are vertical lines.

Alternatively, according to an embodiment not illustrated, the infeeds L1, L2, L3, L4, L5, L6 may be defined by outlets of a containment container, for example a hopper.

According to an aspect, the conveying lines L1, L2, L3, L4, L5, L6 comprise corresponding conveyor belts.

Preferably, the infeeds L1, L2, L3, L4, L5, L6 are configured for feeding the articles A in groups, that is to say, in rows.

With specific reference to the conveying lines, the conveying lines L1, L2, L3, L4, L5, L6 preferably convey groups of articles A, in such a way that between one group and the next there is a predetermined distance (which may be constant or variable). This distance separates one group of articles A from another.

According to an aspect, the articles A can be fed by the infeeds L1, L2, L3, L4, L5, L6 at a regular frequency (that is to say, at a predetermined distance) or according to an irregular flow, that is to say, without a predetermined distance between the articles or between groups of articles A.

According to another aspect, the control unit 6 is configured for moving the conveying units 4 in such a way as to position, in the second zone Z2 for collecting the articles A, at each single feed infeed L1, L2, L3, L4, L5, L6 and for a predetermined collecting time, at most a single unit 4 for conveying articles A.

In short, the control unit 6 is configured in such a way as to position at most one unit 4 at each single infeed L1, L2, L3, L4, L5, L6.

Preferably, the infeeds L1, L2, L3, L4, L5, L6 are positioned above the conveying surface 2.

For this reason, the articles A are released by gravity from the infeeds L1, L2, L3, L4, L5, L6 on the containers C of the units 4 positioned waiting in the second zone Z2 for collecting the articles A.

It should be noted that the second zone Z2 for collecting the articles A therefore comprises a plurality of collecting sub-zones, each which can be engaged by a single unit 4.

It should be noted that, preferably, according to the embodiment illustrated in the accompanying drawings, each collection sub-zone is positioned below one of the infeeds L1, L2, L3, L4, L5, L6.

According to another aspect, the control unit 6 is configured for moving the conveying units 4 according to a sequence of movement which also affects a fourth waiting zone Z4, and to position at least one portion of the conveying units 4 in the fourth waiting zone Z4 after it has moved them in the second zone Z2 for collecting the articles A.

In short, the fourth waiting zone Z4 forms a sort of buffer, which is able to compensate for any differences in the number of feed lines and pickup elements 8.

It should be noted that, in the fourth zone Z4, the control unit 6 has a matrix, that is to say, a group of units 4 preferably equal to, or greater than, the number of pickup elements 8.

In that way, the entire group of units 4 waiting in the fourth zone Z4, or a part, is sent to the pickup elements 8.

The apparatus 1 is extremely flexible: in effect, it is able to also operate with variations in the feed speed of the articles A / containers C.

According to another aspect, the control unit 6 is configured for moving the conveying units 4 according to a sequence of movement which also affects a fifth waiting zone Z5, and to position at least one portion of the conveying units 4 in the fifth waiting zone Z5 after it has moved them in the third pickup zone Z of the containers C.

It should be noted that, in general, the number of units 4 is, preferably, greater than that of the infeeds L1, L2, L3, L4, L5, L6.

More in general, the number of units 4 is, preferably, greater than that of the active infeeds L1, L2, L3, L4, L5, L6, that is to say, operating for feeding the articles A.

It should be noted that according to another aspect, the apparatus 1 comprises a device 15 for loading the containers C into the seats 5 of the units 4.

The loading device 15 comprises a plurality of elements for gripping the containers C, each configured to retain a container C so as to move them between a gripping position (wherein they pick up the container C from one or more inlets for feeding containers C, that is, from a storage unit in which the containers C are accumulated in a waiting condition) and a position for releasing the containers C on the seats 5 of the units 4.

Depending on the embodiment, the loading device 15 releases the container C onto the seat 5 of a single unit 4 or on the seats 5 of a pair of units 4 (in that case, the supporting seat of the container C is defined by the pair of units 4, that is, by the set of seats 5 of two units 4 and each seat 5 of the single unit 4 of the pair of units 4 houses a part of the container C).

Preferably, but not necessarily, the containers C are in the form of tubs.

More generally speaking, the containers C may be of any type: for example in the form of a cup, glass, box, bag, bottle.

Preferably, the containers C are open upwards, that is to say, at the top.

It should be noted that, preferably, the seats 5 are open upwards, that is to say, at the top.

With reference to an embodiment not illustrated, it should be noted that the apparatus 1 may be configured in such a way that a seat 5 for housing the containers C is defined by a pair of units 4, which are suitably placed side by side.

According to this embodiment, the control unit 6 is configured for moving in a synchronous fashion pairs of units 4, in such a way as to actuate, for the pair of units 4, the sequence of movement described above in relation to a single unit having the seat for housing the containers C.

According to another aspect, the unit 4 comprises a first base portion 11, in which the magnetic elements and a removable seat 5 are positioned.

The removable seat 5 is defined by a support 10, configured for coupling by rotation with the first base portion 11.

Basically, the support 10 is positioned in a predetermined rotation, and a subsequent rotation (about an axis perpendicular to the plane defined by the first base portion 11) allows the support 10 to be locked, in a fast manner, to the first base portion 11.

It should be noted that the support 10 has a plurality of coupling tabs 12 (more precisely, in a non-limiting manner, four).

The coupling tabs 12 allow the removable coupling with the first base portion 11.

Preferably, the first base portion 11 has a rectangular shape; yet more preferably square.

Preferably, the seat 5 is defined by a plurality of vertical elements 13.

Preferably, the bottom of the seat 5 is defined by the upper surface of the first base portion 11.

According to another aspect, the unit 4 comprises a scraping element 16.

Preferably, the scraping element 16 is carried by the unit 4.

More precisely, the scraping element 16 is carried by the base portion 11.

It should be noted that the scraping element 16 is preferably removably coupled to the base portion 11.

The scraping element 16 is configured to make contact with the conveying surface 2, so as to prevent, advantageously, any small parts (e.g. crumbs, processing residues, dust, etc.) from being inserted in the underlying zone between the base portion 11 and the conveying surface 2, determining an incorrect, or imprecise, movement of the unit 4.

Also, advantageously, in use, the scraping element 16 is inclined relative to the conveying surface 2. This allows, during movement of the unit 4, the expulsion of any articles A fallen on the conveying surface 2 to be facilitated (for example, on account of abnormal events relative to normal operation of the apparatus 1).

Preferably, the scraping element 16 is made of rubber or plastic material.

According to another aspect, the apparatus 11 comprises at least one sensor 14, configured to detect the transit of articles A towards the second zone Z2 for collecting the articles A inside the containers C or to detect the release of articles A inside the containers C, located close to the second zone Z2 for collecting the articles A inside the containers C.

The control unit 6 is connected to the sensor 14 to receive from it information regarding the measurements taken.

Advantageously, according to this aspect, it is possible to control in an extremely simple and effective manner that the containers C are filled correctly.

In effect, the control unit 6 is configured to count the articles on the basis of the information regarding the measurements taken; consequently, the control unit 6, on the basis of the count, is able to know the articles loaded in each container C and to label each container as "suitable" or "unsuitable" on the basis of the number of articles A to be loaded.

The unsuitable containers will be rejected.

In this regard, the apparatus 1 further comprises a rejecting device, configured to pickup the containers C considered "unsuitable" from the units 4, not illustrated, and operating on the conveying surface 2.

For this reason, the control unit 6 is configured for conveying the articles considered "unsuitable" to the rejecting device.

The advantages of the apparatus 1 are described below.

Advantageously, the apparatus 1 according to the invention is extremely flexible: in fact, it is possible to vary, in an extremely fast manner, the number of infeeds of the active articles A, as well as the number of containers C released at each cycle, or the number of pickup elements 8, without this having any impact on the correct operation of the apparatus 1.

It should be noted that any disturbances or malfunctions on the feeding of the articles A, of the containers C or malfunctions of the pickup elements 8 do not adversely affect the normal operation of the apparatus 1, which can rapidly adapt to the changed conditions.

It should also be noted, by way of example, that if only one container C is not regularly fed in a group of n containers C, the control unit 6 may send the n-1 units 4 with containers towards the second zone Z2 for collecting the articles A and leave the unit without the container C in the first zone Z1, waiting to receive a subsequent container C.

Moreover, the number of infeeds of articles A, the number of containers C fed with each cycle and the number of pickup elements 8 may also be different, since the apparatus 1, thanks to the plurality of units 4, can adapt the relative operation on the basis of the operating conditions / relative configuration.

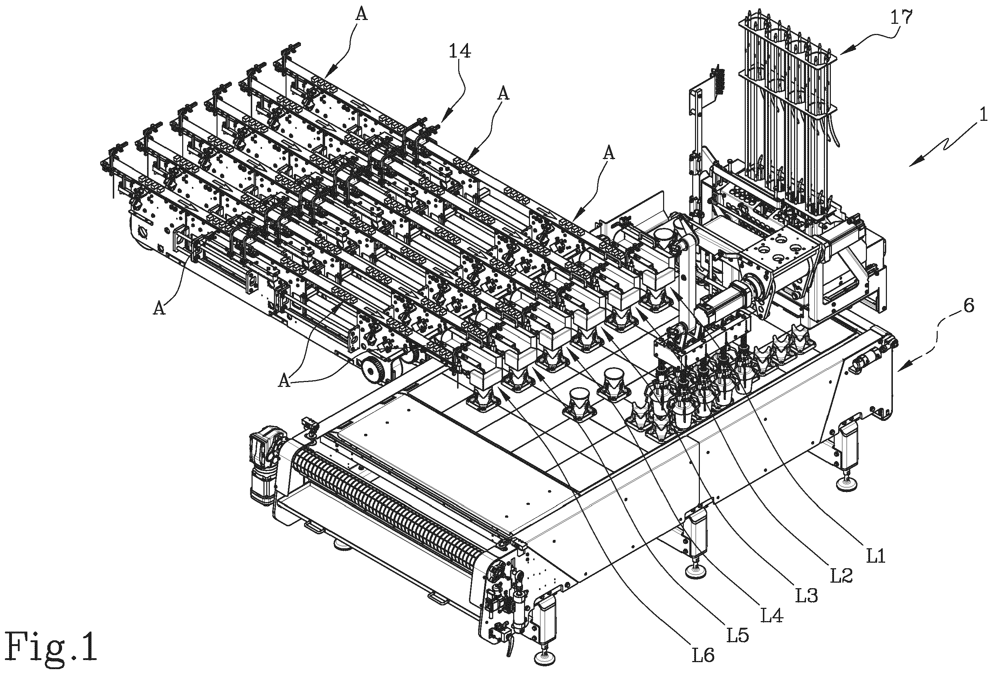

According to another aspect, the apparatus 1 comprises a device 17 for loading the containers C (illustrated in Figure 1).

The device 17 is configured to release containers C on the seats 5 of the units waiting in the first zone Z1.

According to another aspect, a method is also defined for inserting articles A inside containers C in a planar motor 9 defined by a conveying surface 2 comprising a plurality of electrically magnetisable elements and by a plurality of units 4 for conveying articles A.

The units 4 comprise magnetic elements, are movable on said conveying surface 2, and also comprise a seat 5 configured to receive a container C. According to the invention, the method comprises the following steps:
- actuating the conveying units 4 so as to move them according to a sequence of movement which comprises, sequentially:
- placing the conveying units 4 at a first zone Z1 for loading containers C, wherein the conveying units 4 receive the containers C inside the respective seats 5;
- placing the conveying units 4 at a second zone Z2 for collecting articles A inside containers C positioned in the respective carrier seats 5 of conveying units 4;
- placing the conveying units 4 at a third zone Z for picking up containers C having inside them the respective articles A.

It should be noted that the movement sequence is performed cyclically, that is to say, a single unit 4 repeats the above-mentioned sequence several times.

According to another aspect, the method further comprises the step of actuating the conveying units 4 so as to move them according to a sequence of movement which comprises positioning the conveying units 4 at a fourth waiting zone Z4, after the conveying units 4 have engaged the second zone Z2 for collecting the articles A.

According to yet another aspect, the method further comprises the step of actuating the conveying units 4 so as to move them according to a movement sequence which comprises the positioning of the conveying units 4 at a fifth waiting zone Z5, after the conveying units 4 have engaged the third zone Z for picking up the containers C.

According to an aspect, the step of positioning the conveying units 4 at the second zone Z2 comprises a step of positioning for a predetermined time, at the most, a single conveying unit 4 for each portion of the second zone Z2 for collecting the articles A, to allow the loading of articles A inside the containers C.

Alternatively to the above-mentioned aspect, the step of positioning the conveying units 4 at the second zone Z2 comprises a step of positioning for a predetermined time a pair of conveying units 4 for each portion of the second zone Z2 for collecting the articles A, to allow the loading of articles A inside the containers C, with said containers retained in a cavity defined by the set of seats 5 of the pair of units 4.

According to another aspect, the method further comprises the step of actuating the conveying units 4 so as to move them according to a sequence of movement which comprises positioning the conveying units 4 at a sixth waiting zone Z6, after the conveying units 4 have engaged the first zone Z1 for picking up the containers C and before engaging the second zone Z2.

Preferably, the sixth waiting zone Z6 is adjacent to the second zone Z2.

In this way, advantageously, the sixth waiting zone Z6 creates a buffer of units 4 having the container C waiting to be positioned in the second zone Z2 to receive the articles A.

According to another aspect, the method comprises the following steps:
- receiving transfer information regarding the successful transfer of the containers C on a predetermined number n of units 4 positioned awaiting containers C in the first zone Z1;
- processing said transfer information, to derive an indication regarding the success or failure of the transfer of the containers C on said n units 4 waiting in the first zone Z1;
- if said indication identifies the failure of transferring a container C on a unit 4 waiting in the first zone Z1 of the container, keeping said unit 4 waiting for a container C in the first zone Z1.

According to another aspect, an information technology product is also provided, configured to actuate one or more of the steps of the method mentioned above, when loaded on a control unit 6 of a planar motor 9.

## Claims

1. An apparatus (1) for inserting articles (A) inside containers (C) comprising:
- a conveying surface (2) comprising a plurality of electrically magnetisable elements;
- a plurality of units (4) for conveying articles (A), comprising magnetic elements and movable on said conveying surface (2), each conveying unit (4) comprising a seat (5) configured to receive at least one portion of a container (C);
- a control unit (6), connected to said electrically magnetisable elements of the conveying surface (2) for activating them and deactivating them, so as to generate a predetermined magnetic field variable on said conveying surface (2) and allow, consequently, the movement of said conveying units (4) above said conveying surface (2),
the control unit (6) being configured for moving the conveying units (4) according to a sequence of movement which affects:
- a first zone (Z1) for loading containers (C), in which the conveying units (4) receive the containers (C) inside respective seats (5);
- a second zone (Z2) for collecting articles (A) inside containers (C) positioned in the respective seats (5) of conveying units (4);
- a third zone (Z3) for picking up containers (C) having inside them the respective articles (A).

2. The apparatus (1) according to the preceding claim, wherein the control unit (6) is configured to move the conveying units (4) according to a sequence of movement which affects, in sequence, the first loading zone (Z1), the second collecting zone (Z2) and the third pickup zone (Z3).

3. The apparatus (1) according to claim 1 or 2, comprising a pickup device (7), operating at said third pickup zone (Z3) of the containers (C) for picking up the containers (C) containing the articles (A) from the seat (5) of the units (4), the pickup device (7) comprising a plurality of pickup elements (8) operating on the containers (C).

4. The apparatus (1) according to claim 3, wherein the pickup device (7) is configured to move the pickup elements (8) between a pickup position, wherein the pickup elements (8) act on the conveying units (4) positioned at the third pickup zone (Z3) of the containers (C) for picking up said containers (C) containing the articles (A) from the seats (5) of the units (4), and a release position, wherein the pickup elements (8) release the containers (C) picked up.

5. The apparatus (1) according to any one of the preceding claims, comprising a plurality of infeeds (L1, L2, L3, L4, L5, L6) for feeding articles (A), configured for feeding articles (A) at the second zone (Z2) for collecting the articles (A).

6. The apparatus (1) according to the preceding claim, wherein said infeeds (L1, L2, L3, L4, L5, L6) for feeding articles (A) are configured for feeding groups of articles (A).

7. The apparatus (1) according to any one of the preceding claims, wherein the control unit (6) is configured for moving the conveying units (4) in such a way as to position, in the second zone (Z2) for collecting the articles (A), at each single feed infeed (L1, L2, L3, L4, L5, L6) and for a predetermined collecting time, at most a single unit (4) for conveying articles (A).

8. The apparatus (1) according to any one of the preceding claims, wherein the control unit (6) is configured for moving the conveying units (4) according to a sequence of movement which also affects a fourth waiting zone (Z4), and to position at least one portion of the conveying units (4) in the fourth waiting zone (Z4) after it has moved them in the second zone (Z2) for collecting the articles (A).

9. The apparatus (1) according to any one of the preceding claims, wherein the control unit (6) is configured for moving the conveying units (4) according to a sequence of movement which also affects a fifth waiting zone (Z5), and to position at least one portion of the conveying units (4) in the fifth waiting zone (Z5) after it has moved them in the third pickup zone (Z3) of the containers (C).

10. The apparatus (1) according to any one of the preceding claims, wherein the unit (4) comprises a first base portion (11), in which are positioned the magnetic elements and a removable seat (5), the removable seat (5) being defined by a support (10), configured for removably coupling with the first base portion (11).

11. The apparatus (1) according to any one of the preceding claims, wherein the control unit (6) is configured for moving the conveying units (4) according to a sequence of movement which also affects a sixth waiting zone (Z6), and to position at least one portion of the conveying units (4) in the sixth waiting zone (Z6) after it has moved them in the first pickup zone (Z1) of the containers (C) and before they engage the second zone (Z2).

12. The apparatus (1) according to any one of the preceding claims, wherein the unit (4) comprises a scraping element (16).

13. A method for inserting articles (A) inside containers (C) in a planar motor (9) defined by a conveying surface (2) comprising a plurality of elements which can be electrically magnetised and by a plurality of units (4) for conveying articles (A), comprising magnetic elements and movable on said conveying surface (2), each conveying unit (4) comprising a seat (5) configured to receive a container (C),
the method comprises the following steps:
- actuating the conveying units (4) so as to move them according to a sequence of movement which comprises, sequentially:
- placing the conveying units (4) at a first zone (Z1) for loading containers (C), wherein the conveying units (4) receive the containers (C) inside the respective seats (5);
- placing the conveying units (4) at a second zone (Z2) for collecting articles (A) inside containers (C) positioned in the respective carrier seats (5) of conveying units (4);
- placing the conveying units (4) at a third zone (Z3) for picking up containers (C) having inside them the respective articles (A).

14. The method according to the preceding claim, further comprising the step of actuating the conveying units (4) so as to move them according to a sequence of movement which comprises positioning the conveying units (4) at a fourth waiting zone (Z4), after the conveying units (4) have engaged the second zone (Z2) for collecting the articles (A).

15. The method according to any one of claims 13 to 14, further comprising the step of actuating the conveying units (4) so as to move them according to a sequence of movement which comprises positioning the conveying units (4) at a fifth waiting zone (Z5), after the conveying units (4) have engaged the third zone (Z3) for picking up the containers (C).

16. The method according to any one of claims 13 to 15, wherein the step of positioning the conveying units (4) at the second zone (Z2) comprises a step of positioning for a predetermined time, at the most, a single conveying unit (4) for each portion of the second zone (Z2) for collecting the articles (A), to allow the loading of articles (A) inside the containers (C).

17. The method according to any one of claims 13 to 16, further comprising the step of actuating the conveying units (4) so as to move them according to a sequence of movement which comprises positioning the conveying units (4) at a sixth waiting zone (Z6), after the conveying units (4) have engaged the second zone (Z2) and before they engage the second zone (Z2).

18. The method according to any one of claims from 13 to 17, comprising the steps of:
- receiving transfer information, regarding the successful transfer of the containers (C) on a predetermined number n of conveying units (4) positioned awaiting containers (C) in the first zone (Z1);
- processing said transfer information, to derive an indication regarding the success or failure of the transfer of the containers (C) on said n units (4) waiting in the first zone (Z1);
- if said indication identifies the failure of the transfer of a container (C) on a unit (4) waiting in the first zone (Z1) of the container, keeping said unit (4) waiting in the first zone (Z1).

19. A computer product configured to implement the steps of the method according to any one of claims 13 to 18, when loaded onto a control unit (6) of a planar motor (9).
